# EUROPEAN PATENT APPLICATION

(11) **EP 4 160 715 A1**
(43) Date of publication of application: **05.04.2023**
(21) Application number: 21811785.1
(22) Date of filing: 02.04.2021
(51) Int. Cl.: H01M 4/13, H01M 4/62, H01M 10/052, H01M 10/0565, H01B 1/06

(54) **SOLID ELECTROLYTE, ELECTRODE, POWER STORAGE ELEMENT, AND METHOD FOR PRODUCING SOLID ELECTROLYTE**

(30) Priority: 29.05.2020 JP 2020094507
(71) Applicant: PANASONIC INTELLECTUAL PROPERTY MANAGEMENT CO., LTD., Chuo-ku Osaka-shi Osaka 540-6207 (JP)
(72) Inventor: YABE, Hiroki, Osaka-shi, Osaka 540-6207 (JP); SAGARA, Akihiko, Osaka-shi, Osaka 540-6207 (JP)
(74) Representative: Eisenführ Speiser
(86) International application number: PCT/JP2021/014409
(87) International publication number: WO 2021/241002

(57) **Abstract**

A solid electrolyte 10 of the present disclosure includes: a porous dielectric 11 having a plurality of pores 12 interconnected; and an electrolyte 13 including a metal salt and at least one selected from the group consisting of an ionic compound and a bipolar compound and at least partially filling an interior of the plurality of pores 12. The porous dielectric 11 includes a polyether structure. The plurality of pores 12 have an average pore diameter of 20 nm or more and 100 nm or less.

## Description

### TECHNICAL FIELD

The present invention relates to a solid electrolyte, an electrode, a power storage device, and a method for producing a solid electrolyte.

### BACKGROUND ART

All-solid-state lithium secondary batteries have recently been under development as next-generation batteries. It has been desired to improve the ionic conductivity of solid electrolytes used in power storage devices such as all-solid-state lithium secondary batteries.

Patent Literature 1 discloses a method for producing a solid electrolyte by a sol-gel process using a liquid mixture containing an ionic liquid, a lithium salt, and a silica precursor.

### CITATION LIST

### Patent Literature

Patent Literature 1: JP 2012-518248 A

### SUMMARY OF INVENTION

### Technical Problem

Solid electrolytes are sometimes required to have flexibility. The present disclosure provides a technique for improving flexibility of solid electrolytes.

### Solution to Problem

The present disclosure provides a solid electrolyte including:
a porous dielectric having a plurality of pores interconnected; and
an electrolyte including a metal salt and at least one selected from the group consisting of an ionic compound and a bipolar compound and at least partially filling an interior of the plurality of pores, wherein
the porous dielectric includes a polyether structure, and
the plurality of pores have an average pore diameter of 20 nm or more and 100 nm or less.

### Advantageous Effects of Invention

According to the present disclosure, the solid electrolyte can have improved flexibility.

### BRIEF DESCRIPTION OF DRAWINGS

FIG. 1A schematically shows an example of a cross-sectional structure of a solid electrolyte according to a first embodiment.
FIG. 1B schematically shows a cross-section of a pore of a porous dielectric.
FIG. 2 is a flowchart showing an example of a method for producing the solid electrolyte according to the first embodiment.
FIG. 3 schematically shows an example of a cross-sectional structure of an electrode according to a second embodiment.
FIG. 4 is a flowchart showing an example of a method for producing the electrode according to the second embodiment.
FIG. 5 is a flowchart showing another example of the method for producing the electrode according to the second embodiment.
FIG. 6 is a flowchart showing yet another example of the method for producing the electrode according to the second embodiment.
FIG. 7 schematically shows an example of a cross-sectional structure of a power storage device according to a third embodiment.
FIG. 8 schematically shows an example of a cross-sectional structure of a power storage device according to a fourth embodiment.
FIG. 9 schematically shows an example of a cross-sectional structure of a power storage device according to a fifth embodiment.

### DESCRIPTION OF EMBODIMENTS

### (Findings on which the present disclosure is based)

In a solid electrolyte described in Patent Literature 1, pores of porous silica are impregnated with an ionic liquid. An inorganic porous dielectric formed of, for example, porous silica has poor flexibility, and thus a solid electrolyte including the inorganic porous dielectric also has poor flexibility. When a strong external force is applied to a solid electrolyte having poor flexibility, a skeleton of the porous dielectric can be broken. When a solid electrolyte is used in batteries serving as electrical power sources of mobile electronic devices, vehicles, etc., it is desirable that a skeleton of the solid electrolyte not be likely to be broken by an external force.

In some cases, an electrode active material that greatly expands and shrinks by charging and discharging is included in a battery. Excessive expansion and shrinkage of the electrode active material decrease, for example, the cycle performance of the battery. When a solid electrolyte has excellent flexibility, it is expected that expansion and shrinkage of the electrode active material are absorbed by the solid electrolyte to improve the cycle performance of the battery.

The present inventors have conceived the solid electrolyte of the present disclosure on the basis of the above finding.

### (Summary of one aspect according to the present disclosure)

A solid electrolyte according to a first aspect of the present disclosure includes:
a porous dielectric having a plurality of pores interconnected; and
an electrolyte including a metal salt and at least one selected from the group consisting of an ionic compound and a bipolar compound and at least partially filling an interior of the plurality of pores, wherein
the porous dielectric includes a polyether structure, and
the plurality of pores have an average pore diameter of 20 nm or more and 100 nm or less.

According to the first aspect, the solid electrolyte having improved flexibility can be obtained.

According to a second aspect of the present disclosure, for example, in the solid electrolyte according to the first aspect, the polyether structure may be bonded to a metal atom forming the porous dielectric. The polyether structure bonded to the metal atom is less likely to move away from the metal atom to the electrolyte. Upon application of a load to the rigid structure of the porous dielectric, the polyether structure reliably exhibits a load cushioning action.

According to a third aspect of the present disclosure, for example, in the solid electrolyte according to the first or second aspect, one end of the polyether structure may be bonded to a metal atom forming the porous dielectric, and the other end of the polyether structure may be bonded to another metal atom forming the porous dielectric. This structure also can impart flexibility to the porous dielectric.

According to a fourth aspect of the present disclosure, for example, in the solid electrolyte according to the second or third aspect, a bond between the polyether structure and the metal atom may be a covalent bond. According to the fourth aspect, upon application of a load to the porous dielectric, the polyether structure reliably exhibits the load cushioning action.

According to a fifth aspect of the present disclosure, for example, in the solid electrolyte according to any one of the first to fourth aspects, the polyether structure may include 3 or more ether groups. Appropriate adjustment of the number of ether groups makes it possible to easily obtain a porous dielectric in solid state and can impart flexibility to the porous dielectric.

According to a sixth aspect of the present disclosure, for example, in the solid electrolyte according to any one of the first to fifth aspects, the polyether structure may include 35 or less ether groups. Appropriate adjustment of the number of ether groups makes it possible to easily obtain a porous dielectric in solid state and can impart flexibility to the porous dielectric.

According to a seventh aspect of the present disclosure, for example, in the solid electrolyte according to any one of the first to sixth aspects, the polyether structure may include a polyethylene oxide structure. Flexibility is likely to be imparted to the porous dielectric including the polyethylene oxide structure.

According to an eighth aspect of the present disclosure, for example, in the solid electrolyte according to any one of the first to seventh aspects, a molar ratio of the polyether structure to a metal atom forming the porous dielectric may be 1 % or more and 15% or less. Appropriate adjustment of the ratio of the polyether structure makes it possible to easily obtain a porous dielectric in solid state and can impart flexibility to the porous dielectric.

According to a ninth aspect of the present disclosure, for example, in the solid electrolyte according to any one of the first to eighth aspects, the porous dielectric may include porous silica having the polyether structure. Porous silica is chemically stable and thus suitable as a matrix material of the solid electrolyte.

According to a tenth aspect of the present disclosure, for example, in the solid electrolyte according to any one of the first to ninth aspects, an amount of the ionic compound and the bipolar compound in the solid electrolyte may be 70 volume% or more and 95 volume% or less. According to the tenth aspect, both the strength of the solid electrolyte and the ionic conductivity thereof can be achieved.

According to an eleventh aspect of the present disclosure, for example, in the solid electrolyte according to any one of the first to tenth aspects, the porous dielectric may have a specific surface area of 300 m²/g or more and 1000 m²/g or less. In the case where the specific surface area of the pores is in the appropriate range, an appropriate strength can be imparted to the porous dielectric and a sufficient amount of the electrolyte can be maintained in the pores of the porous dielectric.

An electrode according to a twelfth aspect of the present disclosure includes:
the solid electrolyte according to any one of the first to eleventh aspects; and
an electrode active material.

According to the twelfth aspect, an electrode having excellent properties can be obtained.

An electrical storage device according to a thirteenth aspect of the present disclosure includes:
a positive electrode;
a negative electrode; and
a solid electrolyte layer disposed between the positive electrode and the negative electrode, wherein
the solid electrolyte layer includes the solid electrolyte according to any one of the first to eleventh aspects.

According to the thirteenth aspect, an electrical storage device having excellent properties can be obtained.

An electrical storage device according to a fourteenth aspect of the present disclosure includes:
a positive electrode;
a negative electrode; and
a solid electrolyte layer disposed between the positive electrode and the negative electrode, wherein
at least one selected from the positive electrode and the negative electrode is the electrode according to the twelfth aspect.

According to the fourteenth aspect, an electrical storage device having excellent properties can be obtained.

A method for producing a solid electrolyte according to a fifteenth aspect of the present disclosure includes:
preparing a liquid mixture by mixing a precursor of a porous dielectric, at least one selected from the group consisting of an ionic compound and a bipolar compound, a metal salt, water, and an organic solvent;
forming a solid electrolyte by causing gelation of the liquid mixture to form a gel mixture and drying the gel mixture, wherein
the precursor has a polyether structure.

According to the fifteenth aspect, the solid electrolyte of the present disclosure can be produced efficiently.

According to a sixteenth aspect of the present disclosure, for example, in the production method according to the fifteenth aspect, the precursor may include a metal alkoxide having the polyether structure. According to the sixteenth aspect, the solid electrolyte of the present disclosure can be produced efficiently.

According to a seventeenth aspect, for example, in the production method according to the sixteenth aspect, the metal alkoxide may be a silicon alkoxide. With the use of a silicon alkoxide, a porous dielectric can be efficiently formed.

Hereinafter, embodiments of the present invention will be described with reference to the drawings. The present invention is not limited to the following embodiments.

### (First embodiment)

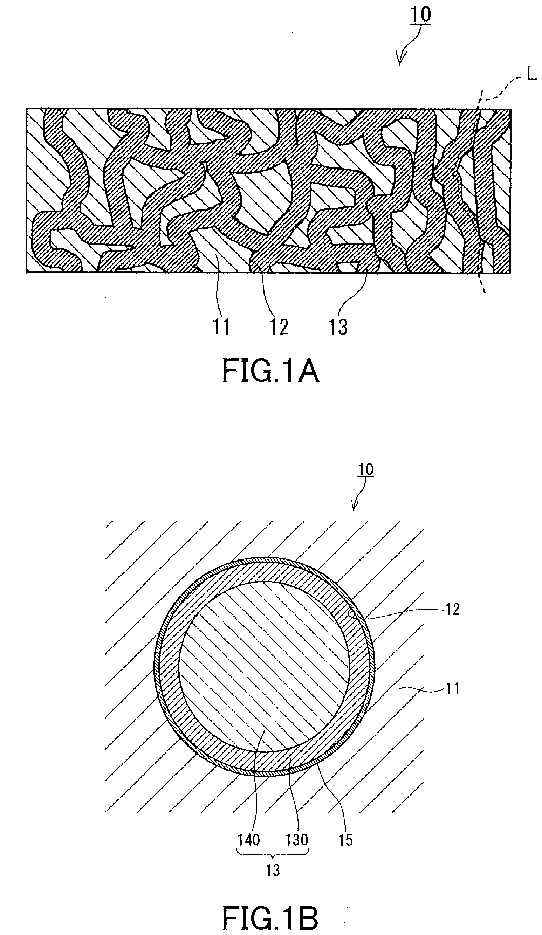

FIG. 1A schematically shows an example of a cross-sectional structure of a solid electrolyte 10 according to a first embodiment. The solid electrolyte 10 includes a porous dielectric 11 and an electrolyte 13. The porous dielectric 11 has a plurality of pores 12 interconnected. The plurality of pores 12 are what are called continuous pores. Incidentally, the plurality of pores 12 may include an isolated pore. The electrolyte 13 covers inner surfaces of these pores 12. The electrolyte 13 may at least partially fill the interior of the plurality of pores 12, or may completely fill the interior of the plurality of pores 12.

In the present embodiment, the plurality of pores 12 of the porous dielectric 11 have an average pore diameter of 20 nm or more and 100 nm or less. In the case where the average pore diameter of the pores 12 is in the appropriate range, the electrolyte 13 is likely to be held in the pores 12. Moreover, in that case, conduction paths in the electrolyte 13 are sufficiently formed, and thus the solid electrolyte 10 having high ionic conductivity can be obtained. Furthermore, in that case, the electrolyte 13 easily passes through the pore 12, and thus the strength and flexibility of the solid electrolyte 10 are sufficiently high. The average pore diameter of the pores 12 of the porous dielectric 11 can be controlled by the amount of a porous body forming the porous dielectric 11 and the amount of the electrolyte 13 included in the porous dielectric 11.

In the present embodiment, the porous dielectric 11 includes a polyether structure. The polyether structure can impart flexibility to the porous dielectric 11. Consequently, the solid electrolyte 10 having improved flexibility is obtained.

The porous dielectric 11 includes, specifically, a plurality of polyether structures. The plurality of polyether structures may be represented by the same chemical formula. The polyether structures may be uniformly dispersed in the entire porous dielectric 11 or may be present on the inner surfaces of the pores 12. Flexibility can be imparted to the entire porous dielectric 11 by uniformly dispersing the polyether structures also in a bulk portion excluding the inner surfaces of the pores 12.

The polyether structure is a structure including a plurality of ether bonds, and is, for example, a polyalkylene oxide structure.

The polyether structure may be a linear structure. In the case of the linear polyether structure, rotational motion at a bonding portion is easy, and thus the linear polyether structure itself can have flexibility. Therefore, the linear polyether structure is likely to impart flexibility to the porous dielectric 11.

The linear polyether structure may have a repeating unit including an ether group. By adjustment of the number of repeating units, it is possible to control the flexibility of the solid electrolyte 10 and design the solid electrolyte 10 obtained by easy solidification.

The polyether structure may be bonded to a metal atom forming the porous dielectric 11. The polyether structure bonded to the metal atom is less likely to move away from the metal atom to the electrolyte 13. Upon application of a load to the rigid structure of the porous dielectric 11, the polyether structure reliably exhibits the load cushioning action. The load cushioning action is directly linked to the flexibility of the solid electrolyte 10.

One end of the polyether structure can form a bond with another atom forming the porous dielectric 11. The other end of the polyether structure may form a bond with still another atom forming the porous dielectric 11 or may be terminated by a group such as an alkyl group.

One end of the polyether structure may be bonded to a metal atom forming the porous dielectric 11, and the other end of the polyether structure may be bonded to another metal atom forming the porous dielectric 11. This structure also can impart flexibility to the porous dielectric 11. Consequently, the solid electrolyte 10 having improved flexibility is obtained.

A bond between the polyether structure and a metal atom forming the porous dielectric 11 is, for example, a covalent bond. The covalent bond strongly bonds the metal atom and the polyether structure. Therefore, upon application of a load to the porous dielectric 11, the polyether structure reliably exhibits the load cushioning action.

The number of ether groups in the polyether structure is not particularly limited. In one example, the polyether structure may include 3 or more ether groups. The polyether structure may include 35 or less ether groups. Appropriate adjustment of the number of ether groups makes it possible to easily obtain the porous dielectric 11 in solid state and can impart flexibility to the porous dielectric 11. Consequently, the solid electrolyte 10 having improved flexibility is obtained. High ion conducting performance can also be achieved.

Examples of the polyether structure include a polyethersulfone structure, a polyetherketone structure, a polyetherimide structure, and a polyethylene oxide structure. The polyether structure may include a polyethylene oxide structure. In other words, the polyether structure has a repeating unit of polyethylene oxide. The polyethylene oxide structure is represented by (-CH₂-CH₂-O-)ₙ. The symbol n is an integer of 1 or more. The polyethylene oxide is chemically stable. Additionally, a covalent bond in the polyethylene oxide can easily make a rotational motion. Therefore, flexibility is likely to be imparted to the porous dielectric 11 including the polyethylene oxide structure. Consequently, the solid electrolyte 10 having improved flexibility is obtained.

A molar ratio of the polyether structure to the metal atom forming the porous dielectric 11 may be 1% or more and 15% or less. Appropriate adjustment of the ratio of the polyether structure makes it possible to easily obtain the porous dielectric 11 in solid state and can impart flexibility to the porous dielectric 11. Consequently, the solid electrolyte 10 having improved flexibility is obtained. High ion conducting performance can also be achieved. The molar ratio of the polyether structure to the metal atom forming the porous dielectric 11 may be 2% or more and 10% or less.

FIG. 1B schematically shows a cross-section of the pore 12 of the porous dielectric 11. The electrolyte 13 may include a polarization layer 130. The polarization layer 130 is a layer adsorbed to the inner surface of a surface adsorption layer 15. The polarization layer 130 may be a continuous film continuously formed along a direction in which the pore 12 extends. In the polarization layer 130, ions contained in the electrolyte 13 are oriented regularly. The polarization layers 130 provided on the inner surfaces of the plurality of pores 12 may be interconnected to form a three-dimensional network. As indicated by a dotted line L in FIG. 1A, a conduction path through which a metal ion moves is formed near the inner surface of the pore 12 of the porous dielectric 11. Specifically, a conduction path through which a metal ion moves is formed on the inner surface of the polarization layer 130.

As shown in FIG. 1B, the electrolyte 13 may include a bulk layer 140. The bulk layer 140 has contact with the inner surface of the polarization layer 130. The bulk layer 140 is located farther from the inner surface of the pore 12 than the polarization layer 130. In other words, the bulk layer 140 is located in the central portion of the pore 12. The bulk layer 140 is surrounded by the polarization layer 130. The bulk layer 140 is a layer in which ions derived from an ionic compound and a metal salt are oriented irregularly. In the bulk layer 140, the ions may have flowability. The bulk layer 140 also contributes to metal ion conduction.

As shown in FIG. 1B, the solid electrolyte 10 may further include the surface adsorption layer 15. The surface adsorption layer 15 is located between the inner surface of the pore 12 and the electrolyte 13. The surface adsorption layer 15 is a layer adsorbed to the inner surfaces of the plurality of pores 12 to induce polarization. Because of the presence of the surface adsorption layer 15, the ion conducting performance of the electrolyte 13 is improved and the ionic conductivity of the solid electrolyte 10 is increased. The surface adsorption layer 15 is, however, not necessarily required.

The term "solid" as used herein refers to being in solid state as a whole system at room temperature. Partial inclusion of a liquid is not excluded. Gels, for example, are "solid".

The porous dielectric 11 is, for example, porous silica having the polyether structure. In other words, the porous dielectric 11 is a porous body including a silicon atom modified by the polyether structure. The porous silica is, for example, mesoporous silica. The porous silica is chemically stable and thus suitable as a matrix material of the solid electrolyte 10. The surface of the porous silica is hydrophilic. Thus, for example, when the surface adsorption layer 15 includes water, a water molecule can be stably adsorbed onto the porous silica. Other examples of the porous dielectric 11 include porous alumina (Al₂O₃), porous titania (TiO₂), porous zirconia (ZrO₂), and their mixtures.

The porous dielectric 11 may have a network structure formed by interconnecting silica nanoparticles. The porous dielectric 11 having the network structure has a large surface area, which makes it possible to increase the amount of the electrolyte 13 held in the pores 12. This can reduce leakage of the electrolyte 13 from the solid electrolyte 10.

The silica nanoparticles each may have a diameter of 2 nm or more and 10 nm or less. In the case where the diameters of the silica nanoparticles are in the appropriate range, the strength of the porous dielectric 11 and the surface area of the pore 12 can be sufficiently large. Additionally, in that case, the volume of the silica nanoparticles not contributing to ionic conduction is decreased, and thus the ionic conductivity of the solid electrolyte 10 is increased.

The diameter of the silica nanoparticle can be observed using a scanning electron microscope or a transmission electron microscope. An average of equivalent circle diameters of any 100 particles selected from an electron microscope image may be defined as a particle diameter of each silica nanoparticle.

The porous dielectric 11 may have a porosity in the range of 25% or more and 95% or less. The porosity of the porous dielectric 11 can be controlled by the amount of the porous body forming the porous dielectric 11 and the amount of the electrolyte 13 included in the porous dielectric 11.

The pores 12 may have a specific surface area of 300 m²/g or more and 1500 m²/g or less. In the case where the specific surface area of the pores 12 is in the appropriate range, an appropriate strength can be imparted to the porous dielectric 11 and a sufficient amount of the electrolyte 13 can be held in the pores 12 of the porous dielectric 11. The pores 12 may have a specific surface area of 800 m²/g or more and 1100 m²/g or less.

The diameters of the pores 12 and the specific surface area of the pores 12 may be measured, for example, by the following method. The solid electrolyte 10 is immersed in an organic solvent to dissolve the electrolyte 13 in the organic solvent. The electrolyte 13 is then removed by supercritical drying, followed by measurement of the specific surface area of the porous dielectric 11 by the BET method. From the result of the measurement, the porosity and the diameters of the pores 12 (micropore distribution) can be calculated. Alternatively, the porosity and the diameters of the pores 12 can be determined by preparing a thin piece of the solid electrolyte 10 by the focused ion beam (FIB) technique and observing the thin piece of the solid electrolyte 10 with a transmission electron microscope (TEM).

In the present embodiment, the porous dielectric 11 forms a single layer. The layer of the porous dielectric 11 may be self-supporting. The outer boundary of the solid electrolyte 10 is defined by the porous dielectric 11. Such a configuration allows easy handling of the solid electrolyte 10 and easy application of the solid electrolyte 10 to, for example, power storage devices.

The electrolyte 13 includes, for example, an ionic compound. The ionic compound can be an ionic liquid. Having properties such as flame retardancy, poor volatility, and high ionic conductivity, the ionic liquid is suitable as the material of the solid electrolyte 10. Ions in the ionic liquid can move relatively freely. Therefore, for example, when the electrolyte 13 includes the polarization layer 130, the ions in the polarization layer 130 can be oriented efficiently. The ionic liquid has a melting point, for example, in the range of -95°C to 400°C.

Examples of a cation contained in the ionic liquid include an imidazolium cation, pyridinium cation, piperidinium cation, pyrrolidinium cation, phosphonium cation, morpholinium cation, sulfonium cation, and ammonium cation.

Examples of the cation contained in the ionic liquid include a 1-ethylpyridinium cation, 1-butylpyridinium cation, 1-hexylpyridinium cation, 1-butyl-3-methylpyridinium cation (BMP⁺), 1-butyl-4-methylpyridinium cation, 1-hexyl-3-methylpyridinium cation, 1-butyl-3,4-dimethylpyridinium cation, 1-ethyl-3-hydroxymethylpyridinium cation, 1,1-dimethylpyrrolidinium cation, 1-ethyl-1-methylpyrrolidinium cation, 1-methyl-1-propylpyrrolidinium cation, 1-methyl-1-butylpyrrolidinium cation, 1-methyl-1-pentylpyrrolidinium cation, 1-methyl-1-hexylpyrrolidinium cation, 1-methyl-1-heptylpyrrolidinium cation, 1-ethyl-1-propylpyrrolidinium cation, 1-ethyl-1-butylpyrrolidinium cation, 1-ethyl-1-pentylpyrrolidinium cation, 1-ethyl-1-hexylpyrrolidinium cation, 1-ethyl-1-heptylpyrrolidinium cation, 1,1-dipropylpyrrolidinium cation, 1-propyl-1-butylpyrrolidinium cation, 1,1-dibutylpyrrolidinium cation, 1-propylpiperidinium cation, 1-pentylpiperidinium cation, 1,1-dimethylpiperidinium cation, 1-methyl-1-ethylpiperidinium cation, 1-methyl-1-propylpiperidinium cation (MPPyr), 1-methyl-1-butylpiperidinium cation, 1-methyl-1-pentylpiperidinium cation, 1-methyl-1-hexylpiperidinium cation, 1-methyl-1-heptylpiperidinium cation, 1-ethyl-1-propylpiperidinium cation, 1-ethyl-1-butylpiperidinium cation, 1-ethyl-1-pentylpiperidinium cation, 1-ethyl-1-hexylpiperidinium cation, 1-ethyl-1-heptylpiperidinium cation, 1,1-dipropylpiperidinium cation, 1-propyl-1-butylpiperidinium cation, 1,1-dibutylpiperidinium cation, 2-methyl-1-pyrroline cation, 1-ethyl-2-phenylindole cation, 1,2-dimethylindole cation, 1-ethylcarbazole cation, and N-ethyl-N-methylmorpholinium cation.

Other examples of the cation include a 1,3-dimethylimidazolium cation, 1,3-diethylimidazolium cation, 1-ethyl-3-methylimidazolium cation (EMI⁺), 1-butyl-3-methylimidazolium cation (BMI⁺), 1-methyl-3-propylimidazolium cation (MPI⁺), 1-hexyl-3-methylimidazolium cation, 1-octyl-3-methylimidazolium cation, 1-decyl-3-methylimidazolium cation, 1-dodecyl-3-methylimidazolium cation, 1-tetradecyl-3-methylimidazolium cation, 1,2-dimethyl-3-propylimidazolium cation, 1-ethyl-2,3-dimethylimidazolium cation, 1-butyl-2,3-dimethylimidazolium cation, 1-hexyl-2,3-dimethylimidazolium cation, 1-(2-hydroxyethyl)-3-methylimidazolium cation, 1-allyl-3-methylimidazolium cation, 1,3-dimethyl-1,4,5,6-tetrahydropyrimidinium cation, 1,2,3-trimethyl-1,4,5,6-tetrahydropyrimidinium cation, 1,2,3,4-tetramethyl-1,4,5,6-tetrahydropyrimidinium cation, 1,2,3,5-tetramethyl-1,4,5,6-tetrahydropyrimidinium cation, 1,3-dimethyl-1,4-dihydropyrimidinium cation, 1,3-dimethyl-1,6-dihydropyrimidinium cation, 1,2,3-trimethyl-1,4-dihydropyrimidinium cation, 1,2,3-trimethyl-1,6-dihydropyrimidinium cation, 1,2,3,4-tetramethyl-1,4-dihydropyrimidinium cation, and 1,2,3,4-tetramethyl-1,6-dihydropyrimidinium cation.

Still other examples of the cation include a 1-methylpyrazolium cation, 3-methylpyrazolium cation, 1-ethyl-2-methylpyrazolinium cation, 1-ethyl-2,3,5-trimethylpyrazolium cation, 1-propyl-2,3,5-trimethylpyrazolium cation, 1-butyl-2,3,5-trimethylpyrazolium cation, 1-ethyl-2,3,5-trimethylpyrazolinium cation, 1-propyl-2,3,5-trimethylpyrazolinium cation, and 1-butyl-2,3,5-trimethylpyrazolinium cation.

Still other examples of the cation include a tetramethylammonium cation, tetraethylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, N,N-diethyl-N-methyl-N-(2-methoxyethyl)ammonium cation, glycidyltrimethylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrahexylphosphonium cation, tetraoctylphosphonium cation, triethylmethylphosphonium cation, tributylethylphosphonium cation, trimethyldecylphosphonium cation, and diallyldimethylammonium cation.

One cation selected from the above cations may be used alone, or a mixture of two or more cations selected from the above cations may be used.

Among the cations to be contained in the ionic liquid, a 1-butyl-1-methylpyrrolidinium cation (BMP⁺) and 1-ethyl-3-methylimidazolium cation (EMI⁺) are suitable for the solid electrolyte 10 of the present disclosure. In the case where, for example, the BMP⁺ forms a cation layer, the BMP⁺ can be oriented such that the longitudinal direction of the BMP⁺ (i.e., a direction in which an n-butyl group of the BMP⁺ extends) will be along the inner surface of the pore 12. Therefore, the thickness of the polarization layer 130 with respect to the number of ion layers forming the polarization layer 130 can be reduced, and polarization of the polarization layer 130 can be efficiently induced.

Examples of an anion contained in the ionic liquid include a carboxylate anion, sulfonate anion, halogen anion, hydroxy anion, imide anion, boron anion, cyano anion, phosphate anion, and nitrate anion. "Imide" is sometimes referred to as "amide". Both names can be used herein.

Examples of the anion contained in the ionic liquid include Cl⁻, Br⁻, I⁻, AlCl₄⁻, Al₂Cl₇⁻, BF₄⁻, PF₆⁻, ClO₄⁻, NO₃⁻, CH₃COO⁻, CF₃COO⁻, CH₃SO₃⁻, CF₃SO₃⁻, (CF₃SO₂)₂N⁻, (CF₃SO₂)₃C⁻, AsF₆⁻, SbF₆⁻, NbF₆⁻, TaF₆⁻, F(HF)N⁻, (CN)₂N⁻, C₄F₉SO₃⁻, (C₂F₅SO₂)₂N⁻, C₃F₇COO⁻, (CF₃SO₂)(CF₃CO)N⁻, SCN⁻, C₂F₅SO₃⁻, C₃F₇SO₃⁻, C₄F₉SO₃⁻, (FSO₂)₂N⁻, (C₃F₇SO₂)₂N⁻, (C₄F₉SO₂)₂N⁻, (CH₃O)₂PO₂⁻, (C₂H₅O)₂PO₂⁻, (CN)₂N⁻, (CN)₃C⁻, CH₃OSO₃⁻, C₄H₉OSO₃⁻, C₂H₅OSO₃⁻, n-C₆H₁₃OSO₃⁻, n-C₃H₁₇OSO₃⁻, CH₃(OC₂H₄)₂OSO₃⁻, (C₂F₅)₃PF₃⁻, and CH₃C₆H₄SO₃⁻.

One anion selected from the above anions may be used alone, or a mixture of two or more anions selected from the above anions may be used.

Examples of a compound including the above anion include tetrafluoroborate (HBF₄), hexafluorophosphate (HPF₆), bis(trifluoromethanesulfonyl)imide (C₂HF₆NO₄S₂) (TFSI⁻), and bis(fluorosulfonyl)imide (F₂NO₄S₂).

Among the anions to be contained in the ionic liquid, the bis(trifluoromethanesulfonyl)imide anion (TFSI⁻) is suitable for the solid electrolyte 10 of the present disclosure. In the case where, for example, the TFSI⁻ forms an anion layer, the TFSI⁻ is likely to be oriented regularly because the TFSI⁻ is rotationally symmetric.

The ionic liquid can be composed of a combination of any of the above cations and any of the above anions. At least one selected from the group consisting of 1-butyl-1-methylpyrrolidinium bis(trifluoromethanesulfonyl)imide and 1-ethyl-3-methylimidazolium bis(trifluoromethanesulfonyl)imide can be used as the ionic liquid. These ionic liquids are suitable for the solid electrolyte 10 of the present disclosure.

The electrolyte 13 further includes a metal salt. The metal salt dissolves in the ionic compound and forms the electrolyte 13 along with the ionic compound. For example, an ion of the metal salt can function as a carrier. Examples of a cation of the metal salt include Li⁺, Na⁺, K⁺, Ca²⁺, Mg²⁺, Cu²⁺, Al³⁺, Co²⁺, and Ni²⁺.

The metal salt may be a lithium salt. In the case where the electrolyte 13 includes a lithium salt, a lithium ion can function as a carrier, and thus the solid electrolyte 10 of the present disclosure is applicable to lithium-ion secondary batteries.

The lithium salt may be an inorganic lithium salt, an organic lithium salt, or a mixture thereof. The inorganic lithium salt is a lithium salt having an anion including no carbon atom. The organic lithium salt is a lithium salt having an anion including a carbon atom.

Examples of the inorganic lithium salt include LiPF₆, LiBF₄, LiClO₄, LiAsF₆, Li₂SiF₆, LiSbF₆, LiAlO₄, LiAlCl₄, LiB₁₂F_{b}H_{12-b} (b is an integer of 0 to 3), halogenated lithium, lithium hexafluorophosphate, and lithium hexafluoroarsenate. Examples of the halogenated lithium include lithium chloride, lithium bromide, and lithium iodide.

Examples of the organic lithium salt include: organic lithium salts represented by LiN(SO₂CₘF₂ₘ₊₁)₂ (m is an integer of 1 or more and 8 or less), such as lithium trifluorosulfonate (LiCF₃SO₃ or Li-OTf), lithium bis(trifluoromethanesulfonyl)imide (Li-TFSI), LiN(SO₂CF₃)₂), LiN(SO₂C₂F₅)₂; organic lithium salts represented by LiPFₙ(CₚF₂ₚ₊₁)₆₋ₙ (n is an integer of 1 to 5, and p is an integer of 1 to 8), such as LiPF₅(CF₃); organic lithium salts represented by LiBF_{q}(C_{S}F₂ₛ₊₁)_{4-q} (q is an integer of 1 to 3, and s is an integer of 1 to 8), such as LiBF₃(CF₃); lithium bis(oxalato)borate (LiBOB) represented by LiB(C₂O₄)₂; halogenated LiBOB typified by lithium difluoro(oxalate)borate (LiODFB) represented by LiBF₂(C₂O₄); lithium bis(malonate)borate (LiBMB) represented by LiB(C₃O₄H₂)₂; lithium tetrafluorooxalatophosphate represented by LiPF₄(C₂O₂); and lithium organic salt compounds, such as lithium benzoate, lithium salicylate, lithium phthalate, lithium acetate, lithium propionate, and a Grignard reagent.

One lithium salt or two or more lithium salts selected from the above lithium salts can be used. With the use of Li-TFSI as the lithium salt, the solid electrolyte 10 having high ionic conductivity can be obtained. In the case where, for example, the TFSI⁻ forms an anion layer, the TFSI⁻ is likely to be oriented regularly because the TFSI⁻ is rotationally symmetric.

A ratio of the amount of the lithium salt to the amount of the ionic liquid in the solid electrolyte 10 may be 1.0 or less on a molar basis. When the ratio of the amount of the lithium salt to the amount of the ionic liquid is adjusted appropriately, the solid electrolyte 10 exhibits a high lithium ion conductivity. The ratio of the amount of the lithium salt to the amount of the ionic liquid may be 0.1 or more and 1.0 or less on a molar basis.

The molar ratio of the ionic compound to the metal atom forming the porous dielectric 11 is, for example, more than 0.25 and less than 3.5. This makes it possible to maintain the solid electrolyte 10 in solid state and improve the ionic conductivity. The molar ratio of the ionic compound to the metal atom may be more than 1.0. The molar ratio at which the maximum ionic conductivity is reached depends on the compositions of the porous dielectric 11 and the ionic compound. An optimal molar ratio varies depending on the compositions of the porous dielectric 11 and the ionic compound. The optimal molar ratio can be confirmed by producing a plurality of solid electrolytes having different molar ratios and evaluating the ionic conductivity thereof.

The solid electrolyte 10 exhibits high ionic conductivity even in a low-humidity environment. After stored, for example, in a low humidity environment at 0.0005%RH and room temperature for a sufficient period of time, the solid electrolyte 10 exhibits an ionic conductivity of 1.0 mS/cm or more. The sufficient period of time is, for example, 8 days.

The surface adsorption layer 15 includes, for example, water adsorbed to the inner surfaces of the plurality of pores 12. The water can effectively impart the ability to induce polarization of the polarization layer 130 to the surface adsorption layer 15.

The surface adsorption layer 15 does not necessarily cover the entire inner surface of the pore 12. The inner surface of the pore 12 may include a portion not covered by the surface adsorption layer 15. The polarization layer 130 does not necessarily cover the entire inner surface of the surface adsorption layer 15. The inner surface of the surface adsorption layer 15 may include a portion not covered by the polarization layer 130.

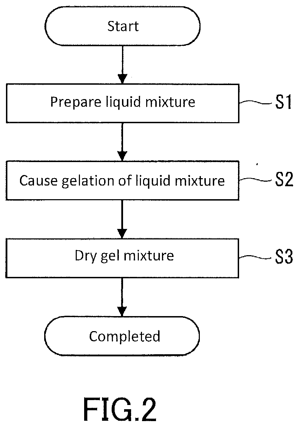

Next, an example of a method for producing the solid electrolyte 10 will be described with reference to FIG. 2. FIG. 2 shows an example of a solid electrolyte production method according to the first embodiment.

The production method shown in FIG. 2 includes a step S1 of preparing a liquid mixture, a step S2 of forming a gel mixture from the liquid mixture, and a step S3 of drying the gel mixture. The solid electrolyte 10 described with reference to FIG. 1A can be produced efficiently by a sol-gel process.

In the step S1, a metal alkoxide, an ionic compound, a metal salt, water, and an organic solvent are mixed. For example, a metal alkoxide, an ionic compound, a metal salt, a lithium salt, water, and an organic solvent are placed in a container and mixed. A liquid mixture can thus be obtained. The metal alkoxide is a precursor of the porous dielectric 11. A bipolar compound may be used instead of the ionic compound or in addition to the ionic compound.

The precursor having a polyether structure is typically a metal alkoxide having a polyether structure. For example, when the polyether structure is bonded to a metal atom of the metal alkoxide, the polyether structure can remain in the porous dielectric 11 obtained by a hydrolysis reaction and a condensation reaction of the metal alkoxide.

The polyether structure has a high affinity for a liquid. The metal alkoxide having the polyether structure is highly compatible with the solvent used in production of the solid electrolyte 10 and the ionic liquid included in the electrolyte 13 filling the pores 12 of the porous dielectric 11. For these reasons, the metal alkoxide having the polyether structure is suitable as a material of the solid electrolyte 10.

In the present embodiment, as the metal alkoxide, the metal alkoxide having the polyether structure may be used alone, or the metal alkoxide having the polyether structure and a metal alkoxide having no polyether structure may be used in combination. The ratio of the polyether structure to the metal atom in the porous dielectric 11 can be adjusted by adjusting a ratio between the metal alkoxide having the polyether structure and the metal alkoxide having no polyether structure. In one example, a ratio of the amount of the metal alkoxide having the polyether structure to a total amount of the metal alkoxides may be 0.5% or more and 15% or less, 1 % or more and 15% or less, or 2% or more and 10% or less on a molar basis. Flexibility can be imparted to the porous dielectric 11 by appropriately adjusting the ratio of the polyether structure.

The metal alkoxide having the polyether structure may be bifunctional or trifunctional. The metal alkoxide having no polyether structure may be bifunctional, trifunctional, or tetrafunctional. When the metal alkoxide having no polyether structure is tetrafunctional, a hydrolysis reaction and a condensation reaction is likely to progress and the network structure of the porous dielectric 11 is likely to be formed.

Examples of the metal alkoxide having the polyether structure include silicon alkoxides represented by the following formulae (1) and (2). With the use of at least one silicon alkoxide selected from these, the porous dielectric 11 can be efficiently formed. A semimetal such as silicon is also treated as a metal herein.

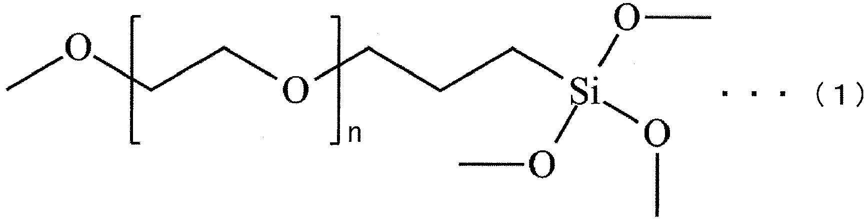

In the formula (1), n can be an integer of 2 or more. The upper limit of n is not particularly limited as long as the solid electrolyte 10 solidifies. The upper limit of n is, for example, 34. The range of n may be 2 to 20. In the formula (1), a carbon atom at one end of the polyether structure is covalently bonded to a silicon atom forming the porous silica. The other end of the polyether structure is a free end and is terminated by an alkyl group. The alkyl group at the other end is a methyl group in the formula (1).

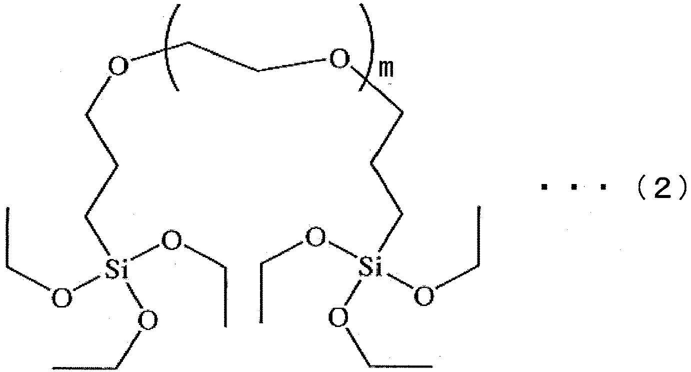

In the formula (2), m can be an integer of 2 or more. The upper limit of m is not particularly limited as long as the solid electrolyte 10 solidifies. The upper limit of m is, for example, 34. In the formula (2), a carbon atom at one end of the polyether structure is covalently bonded to a silicon atom forming the porous silica. A carbon atom at the other end of the polyether structure is covalently bonded to another silicon atom forming the porous silica.

Examples of the silicon alkoxide having no polyether structure include tetraethyl orthosilicate (TEOS), tetramethyl orthosilicate (TMOS), methyltrimethoxysilane (MTMS), phenyltrimethoxysilane (PTMOS), phenyltriethoxysilane (PTEOS), 3-glycidyloxypropyltrimethoxysilane (GOTMS), 3-acryloxypropyltirmethoxysilane (APTMS), 3-aminopropyltriethoxysilane (APTES), and 3-aminopropyltrimethoxysilane (APTMOS). One silicon alkoxide or two or more silicon alkoxides selected from these silicon alkoxides can be used. The boiling point of TEOS is higher than the boiling point of TMOS. Since TEOS is not likely to volatile in the preparation of the liquid mixture, the use of TEOS as a raw material makes it possible to precisely control the amount of silica obtained at the end.

Examples of the silicon alkoxide having the polyether structure include substitution products of the above silicon alkoxides.

The term "substitution product" refers to a silicon alkoxide in which a functional group bonded to a silicon atom of any of the above silicon alkoxides is substituted by the polyether structure. Examples of the functional group bonded to a silicon atom include a hydrogen atom, a methyl group, an ethyl group, a methoxy group, an ethoxy group, a propoxy group, a phenyl group, a 3-glycidyloxypropyl group, a 3-acryloxypropyl group, and 3-aminopropyl. When one methoxy group of tetramethyl orthosilicate (TMOS) is substituted by a group including the polyether structure, the resulting silicon alkoxide is represented by the formula (1). This way of thinking is applicable also to metal alkoxides other than silicon alkoxides.

The precursor of the porous dielectric 11 is not limited to the silicon alkoxide. Other metal alkoxides, such as aluminum tri-sec-butoxide (ATB), tetrabutyl orthotitanate (TBOT), and zirconium(IV) tetrabutoxide (ZTB), can also be used. A mixture of a plurality of metal alkoxides having different metal types may be used as the metal alkoxide.

Examples of the metal salt include the various materials described above.

Examples of the ionic compound include the various materials described above.

Water is a material that hydrolyzes the metal alkoxide, and is, for example, deionized water.

The organic solvent may be a material allowing the metal alkoxide, the ionic compound, the metal salt, and water to be uniformly mixed, and is, for example, an alcohol, an ether, or a ketone. Examples of the alcohol include methanol, ethanol, isopropanol, and 1-methoxy-2-propanol (PGME). Examples of the ether include diethyl ether, dibutyl ether, tetrahydrofuran, and dioxane. Examples of the ketone include methyl ethyl ketone and methyl isobutyl ketone. One organic solvent or two or more organic solvents selected from these organic solvents can be used.

In the step S2, a gel mixture is formed by gelation of the liquid mixture. For example, the liquid mixture is stored in the container at room temperature (e.g., 25°C) or under heating. The heating temperature is, for example, 100°C or lower. In about 3 to 23 days, the liquid mixture turns into a wet gel mixture. The time required for the gelation can be controlled by the amount of water, the amount of the organic solvent, and the storage temperature.

Specifically, the following reactions occur when the silicon alkoxide is used as the metal alkoxide. First, the silicon alkoxide is hydrolyzed to form silanol. Next, two silanol molecules undergo dehydration polycondensation to form a siloxane monomer. Then, a plurality of siloxane molecules undergo dehydration polycondensation to form a siloxane polymer. In this manner, the siloxane polymer forms a three-dimensional network to cause gelation of the liquid mixture.

In the step S3, the gel mixture is dried. The solid electrolyte 10 can thus be obtained. The gel mixture is dried, for example, using a vacuum dryer for 48 to 96 hours under the conditions of a pressure of 0.1 Pa or more and 200 Pa or less and a temperature of 15°C or more and to 150°C or less (ambient temperature). A pre-drying process may be carried out before the vacuum drying step to reduce occurrence of bumping and generation of air bubbles during the vacuum drying. In the pre-drying process, the gel mixture is heated, for example, using a hot plate provided on a local exhaust system for 24 to 96 hours under the conditions of atmospheric pressure and a temperature of 15°C or more and 90°C or less (surface temperature of the hot plate). Most of water and the organic solvent contained in the gel mixture can be evaporated by the pre-drying process. The pre-drying process may be carried out by leaving the gel mixture in air for 24 to 96 hours.

In the case where the gel mixture is sufficiently dried in the step S2, the step S3 may be omitted.

The solid electrolyte 10 may include the bipolar compound instead of the ionic compound or in addition to the ionic compound. The bipolar compound is a compound in which delocalized charges are distributed over a plurality of atoms spaced apart in a molecule.

Examples of the bipolar compound include 1,2-dipoles, 1,3-dipoles, 1,4-dipoles, and 1,5-dipoles. The bipolar compound is, for example, at least one selected from the group consisting of diazomethane, phosphonium ylide, and carbonyl oxide. In the step S1 shown in FIG. 2, the liquid mixture can be prepared using any of these bipolar compounds.

An amount of the ionic compound and the bipolar compound in the solid electrolyte 10 may be 70 volume% or more and 95 volume% or less. When the amount of the ionic compound and the bipolar compound in the solid electrolyte 10 are in the appropriate ranges, both the strength of the solid electrolyte 10 and the ionic conductivity can be achieved.

### (Second embodiment)

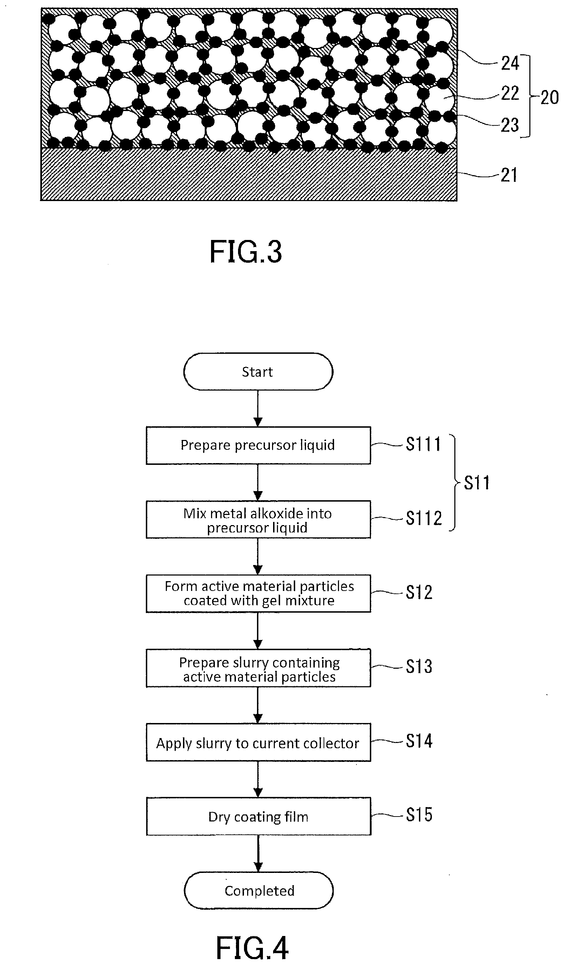

FIG. 3 schematically shows an example of a cross-sectional structure of an electrode 20 according to a second embodiment. In FIG. 3, the electrode 20 is disposed on a current collector 21. The electrode 20 includes an electrode active material, a conductive auxiliary agent, and a solid electrolyte. Specifically, the electrode 20 includes active material particles 22, conductive auxiliary agent particles 23, and a solid electrolyte 24. The active material particles 22 are embedded and fixed in a matrix of the solid electrolyte 24. The conductive auxiliary agent particles 23 are also embedded and fixed in the matrix of the solid electrolyte 24. The shapes of the particles 22 and 23 are not particularly limited.

The current collector 21 is made of a conductive material. Examples of the conductive material include metals, conductive oxides, conductive nitrides, conductive carbides, conductive borides, and conductive resins.

The solid electrolyte 10 described in the first embodiment can be used as the solid electrolyte 24. Since the solid electrolyte 10 of the present disclosure has high ionic conductivity, the electrode 20 having excellent electrical characteristics can be obtained by the use of the solid electrolyte 10.

According to the present embodiment, the active material particles 22 (first particles) and the conductive auxiliary agent particles 23 (second particles) are fixed in the matrix of the solid electrolyte 24. With such a configuration, the electrode 20 can reliably exercise the excellent electrical characteristics attributable to the high ionic conductivity of the solid electrolyte 24.

When the electrode active material used in the electrode 20 is a positive electrode active material, examples of the positive electrode active material include a lithium-containing transition metal oxide, vanadium oxide, chromium oxide, and a lithium-containing transition metal sulfide. Examples of the lithium-containing transition metal oxide include LiCoO₂, LiNiO₂, LiMnO₂, LiMn₂O₄, LiNiCoMnO₂, LiNiCoO₂, LiCoMnO₂, LiNiMnO₂, LiNiCoMnO₄, LiMnNiO₄, LiMnCoO₄, LiNiCoAlO₂, LiNiPO₄, LiCoPO₄, LiMnPO₄, LiFePO₄, Li₂NiSiO₄, Li₂CoSiO₄, Li₂MnSiO₄, Li₂FeSiO₄, LiNiBO₃, LiCoBO₃, LiMnBO₃, and LiFeBOs. Examples of the lithium-containing transition metal sulfide include LiTiS₂, Li₂TiS₃, and Li₃NbS₄. One positive electrode active material or two or more positive electrode active materials selected from these positive electrode active materials can be used.

When the electrode active material used in the electrode 20 is a negative electrode active material, examples of the negative electrode active material include a metal, a semimetal, an oxide, a nitride, and a carbon. Examples of the metal and the semimetal include lithium, silicon, amorphous silicon, aluminum, silver, tin, antimony, and their alloys. Examples of the oxide include Li₄Ti₅O₁₂, Li₂SrTi₆O₁₄, TiO₂, Nb₂O₅, SnO₂, Ta₂O₅, WO₂, WO₃, Fe₂O₃, CoO, MoO₂, SiO, SnBPO₆, and their mixtures. Examples of the nitride include LiCoN, Li₃FeN₂, Li₇MnN₄, and their mixtures. Examples of the carbon include graphite, graphene, hard carbon, carbon nanotube, and their mixtures. One negative electrode active material or two or more negative electrode active materials selected from these negative electrode active materials can be used.

Materials, such as silicon and tin, that are alloyed with lithium during charging are called alloy-based active materials. Because having very large theoretical capacities, alloy-based active materials are suitable for improving battery capacity. At the same time, however, charging and discharging cause a great variation in volume of an alloy-based active material. Batteries including alloy-based active materials are inferior in cycle characteristics.

The solid electrolyte 24 having excellent flexibility is included in the electrode 20 of the present embodiment. Therefore, when an alloy-based active material is used and charging and discharging cause a great variation in volume of the alloy-based active material, the solid electrolyte 24 can adjust to the volume variation. As a result, a good condition of contact between the active material particles 22 and the solid electrolyte 24 is maintained, and thus cycle characteristics of a battery including the electrode 20 is improved.

The conductive auxiliary agent is, for example, a conductive carbon. Examples of the conductive carbon include carbon black, fibrous carbon, graphite, ketjen black, and acetylene black. One conductive auxiliary agent or two or more conductive auxiliary agents selected from these conductive auxiliary agents can be used. The conductive auxiliary agent contributes to a sufficient reduction in the internal resistance of the electrode 20.

The electrode 20 may further include a binder. Examples of the binder include carboxymethyl cellulose (CMC) and styrene-butadiene rubber (SBR). One binder or two or more binders selected from these binders can be used. The binder is effective in maintaining the shape of the electrode 20.

Next, an example of a method for producing the electrode 20 will be described with reference to FIG. 4. FIG. 4 shows an example of an electrode production method according to the second embodiment.

In a step S11, a liquid mixture containing the active material particles is prepared. The step S11 may include a sub-step S111 and a sub-step S112. In the sub-step S111, a precursor liquid is prepared by mixing, for example, the ionic compound, the metal salt, water, the organic solvent, and the active material particles. The precursor liquid may further contain the polyether. In the sub-step S112, the metal alkoxide is mixed into the precursor liquid. A liquid mixture containing the active material particles can thus be obtained. In the sub-step S112, for example, the metal alkoxide is dropped into a container of the precursor liquid. The step S11 is the same step as the step S1 of the first embodiment, except that the active material particles are added to the liquid mixture.

As described in the first embodiment, only the metal alkoxide having the polyether structure may be used as the metal alkoxide, or a combination of the metal alkoxide having the polyether structure and another metal alkoxide may be used as the metal alkoxide.

In a step S12, the active material particles coated with a solid electrolyte is formed. In the step S12, for example, the operations same as those in the step S2 and the step S3 of the first embodiment are carried out. Since the liquid mixture contains the active material particles, the gelation of the liquid mixture forms a gel mixture coating at least a portion of the surface of each active material particle. The active material particles coated with the gel mixture are dried to obtain the active material particles coated with the solid electrolyte.

In a step S13, a slurry containing the coated active material particles is prepared. The coated active material particles and the conductive auxiliary agent particles are added to an electrolyte solution or a solvent, and the materials are mixed. A slurry for producing the electrode can thus be obtained. A binder may be added to the slurry, if necessary. The conductive auxiliary agent may be added to the liquid mixture beforehand in the step S11. Examples of the electrolyte solution used for the preparation of the slurry include an electrolyte solution containing the metal salt and a carbonate ester. Examples of the carbonate ester include chain carbonates, cyclic carbonates, and their mixtures. The electrolyte solution can be obtained, for example, by dissolving LiPF₆ at a concentration of 1 mol/liter in a mixed solvent containing ethylene carbonate and diethyl carbonate at a volume ratio of 1:1. Examples of the solvent used for the preparation of the slurry include water and an organic solvent. Examples of the organic solvent include N-methylpyrrolidone (NMP).

In a step S14, the slurry is applied to a current collector to form a coating film. The method for applying the slurry is not particularly limited. The slurry is applied to the current collector, for example, by blade coating.

In a step S15, the coating film formed on the current collector is dried. The dried coating film may be extended by applying pressure so as to obtain the electrode 20 having a certain volume filling rate. The electrode 20 can thus be obtained. The coating film is dried, for example, using a vacuum dryer for 4 to 12 hours under the conditions of a pressure of 0.1 Pa or more and 200 Pa or less and a temperature of 80°C or more and 150°C or less (ambient temperature).

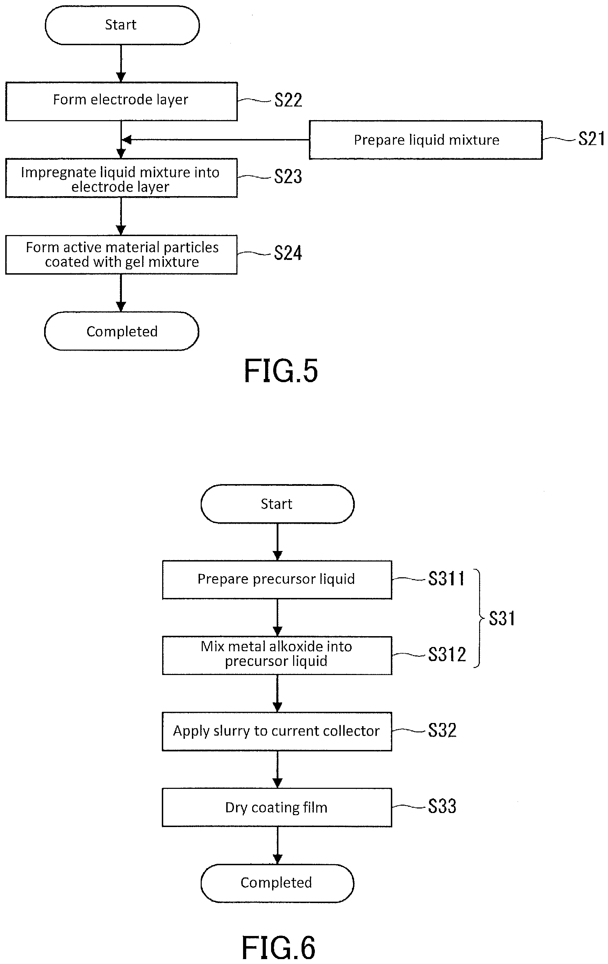

Next, another example of the method for producing the electrode 20 will be described with reference to FIG. 5. FIG. 5 shows another example of the electrode production method according to the second embodiment.

In a step S21, a liquid mixture is prepared. The step S21 is the same step as, for example, the step S1 of the first embodiment.

In a step S22, an electrode layer is formed on a current collector. The electrode layer can be obtained by applying a slurry containing the active material particles and the conductive auxiliary agent particles to the current collector and drying the resulting coating film. The slurry may be prepared by adding an electrolyte solution or an organic solvent to the active material particles and the conductive auxiliary agent particles and mixing the resulting mixture. In the step S22, the operations same as those in the step S14 and the step S15 described with reference to FIG. 4 may be carried out.

The step S21 is independent of the step S22. The order of the step S21 and the step S22 is not particularly limited.

In a step S23, the liquid mixture is impregnated into the electrode layer. To impregnate the liquid mixture into the electrode layer, the liquid mixture may be dropped on the electrode layer or the electrode layer may be immersed in the liquid mixture. The liquid mixture may partially undergo gelation before the impregnation of the electrode layer. For example, by storing the prepared liquid mixture at room temperature for several days, the liquid mixture slightly undergoes gelation. Such a liquid mixture may be impregnated into the electrode layer.

In a step S24, the active material particles coated with a solid electrolyte is formed. The liquid mixture impregnated into the electrode layer undergoes gelation, and the resulting gel mixture is dried. In the step S24, the operations same as those in the step S2 and the step S3 of the first embodiment are carried out. The electrode 20 can thus be obtained.

Next, yet another example of the method for producing the electrode 20 will be described with reference to FIG. 6. FIG. 6 shows yet another example of the electrode production method according to the second embodiment.

In a step S31, a slurry containing the active material particles is prepared. The step S31 may include a sub-step S311 and a sub-step S312. In the sub-step S311, for example, a precursor liquid is prepared by mixing the ionic compound, the metal salt, water, the organic solvent, the active material particles, the conductive auxiliary agent particles, and the binder. The precursor liquid may include the polyether. In the sub-step S312, the metal alkoxide is mixed in the precursor liquid. The slurry for producing the electrode can thus be obtained. In the sub-step S312, the metal alkoxide is, for example, dropped into a container of the precursor liquid.

In a step S32, the slurry is applied to a current collector to form a coating film. The method of applying the slurry is not particularly limited. The slurry is applied to the current collector, for example, by blade coating.

In a step S33, the coating film formed on the current collector is dried. The hydrolysis reaction and dehydration polycondensation reaction described above progress by the drying of the coating film, resulting in formation of a matrix that is a solid electrolyte around the active material particles and the conductive auxiliary agent particles. The coating film may be stored at room temperature for a certain period of time (for example, 4 to 23 days) and subsequently dried under certain conditions. The coating film is dried, for example, using a vacuum dryer for 48 to 72 hours under the conditions of a pressure of 0.1 Pa or more and 200 Pa or less and a temperature of 15°C or more and 150°C or less (ambient temperature). The dried coating film may be extended by applying pressure so as to obtain the electrode 20 having a certain volume filling rate. The electrode 20 can thus be obtained.

### (Third embodiment)

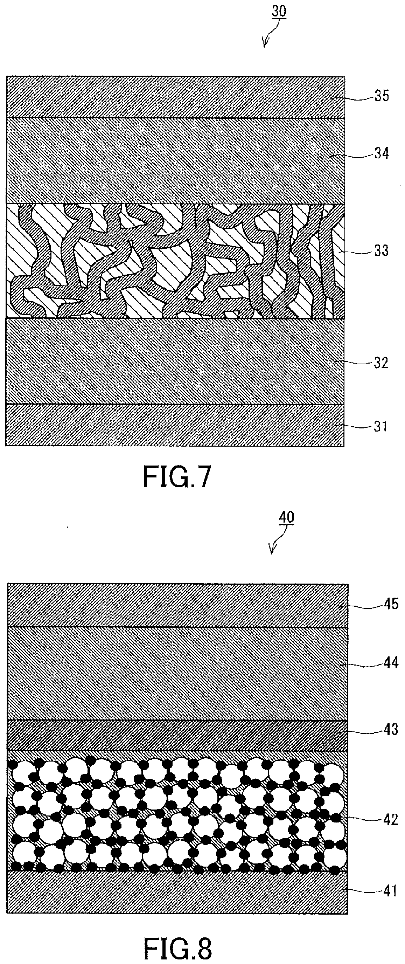

FIG. 7 schematically shows an example of a cross-sectional structure of a power storage device 30 according to a third embodiment. In FIG. 7, the power storage device 30 includes a current collector 31, a positive electrode 32, a solid electrolyte layer 33, a negative electrode 34, and a current collector 35. The current collector 21 described in the second embodiment can be used as the current collectors 31 and 35. The positive electrode 32 includes, for example, the positive electrode active material described in the second embodiment. The negative electrode 34 includes, for example, the negative electrode active material described in the second embodiment.

The solid electrolyte layer 33 is disposed between the positive electrode 32 and the negative electrode 34. The solid electrolyte 10 described in the first embodiment may be included as the solid electrolyte layer 33. Since the solid electrolyte 10 of the present disclosure has high ionic conductivity, the power storage device 30 having excellent electrical characteristics can be obtained with the use of the solid electrolyte 10.

### (Fourth embodiment)

FIG. 8 shows an example of a cross-sectional structure of a power storage device 40 according to a fourth embodiment. In FIG. 8, the power storage device 40 includes a current collector 41, a positive electrode 42, a solid electrolyte layer 43, a negative electrode 44, and a current collector 45. The current collector 21 described in the second embodiment can be used as the current collectors 41 and 45. The electrode 20 described in the second embodiment can be used as the positive electrode 42. The negative electrode 44 includes, for example, the negative electrode active material described in the second embodiment.

The solid electrolyte layer 43 is disposed between the positive electrode 42 and the negative electrode 44. The solid electrolyte 10 described in the first embodiment may be included as the solid electrolyte layer 43. Alternatively, the solid electrolyte layer 43 may be a different solid electrolyte. Examples of the different solid electrolyte include an inorganic solid electrolyte and a polymer electrolyte. Examples of the inorganic solid electrolyte include an inorganic oxide and an inorganic sulfide. Examples of the inorganic oxide include LiPON, LiAlTi(PO₄)₃, LiAlGeTi(PO₄)₃, LiLaTiO, LiLaZrO, Li₃PO₄, Li₂SiO₂, Li₃SiO₄, Li₃VO₄, Li₄SiO₄-Zn₂SiO₄, Li₄GeO₄-Li₂GeZnO₄, Li₂GeZnO₄-Zn₂GeO₄, and Li₄GeO₄-Li₃VO₄. Examples of the inorganic sulfide include Li₂S-P₂S₅, Li₂S-P₂S₅-LiI, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-GeS, Li₂S-P₂S₅-ZnS, Li₂S-P₂S₅-GaS, Li₂S-GeS₂, Li₂S-SiS₂-Li₃PO₄, Li₂S-SiS₂-LiPO, Li₂S-SiS₂-LiSiO, Li₂S-SiS₂-LiGeO, Li₂S-SiS₂-LiBO, Li₂S-SiS₂-LiAlO, Li₂S-SiS₂-LiGaO, Li₂S-SiS₂-LiInO, Li₄GeS₄-Li₃PS₃, Li₄SiS₄-Li₃PS₄, and Li₃PS₄-Li₂S. Examples of the polymer electrolyte include fluorine resins, polyethylene oxide, polyacrylonitrile, polyacrylates, their derivatives, and their copolymers.

The solid electrolyte layer 43 may be omitted when sufficient electron insulation properties can be ensured in the power storage device 40. For example, after the electrode 20 as described with reference to FIG. 3 is prepared, a liquid mixture as described above is applied to a surface of the electrode 20 to form a coating film. A thin solid electrolyte layer can be formed on the electrode 20 by gelation and drying of the coating film. When this thin layer is sufficient to prevent a short circuit between the positive electrode and the negative electrode, no solid electrolyte serving as a separator is separately needed.

In the power storage device 40 shown in FIG. 8, the solid electrolyte-including electrode of the present disclosure is employed only as the positive electrode 42.

### (Fifth embodiment)

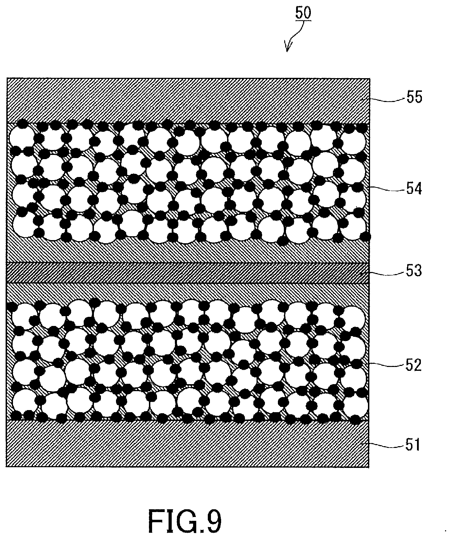

FIG. 9 shows an example of a cross-sectional structure of a power storage device 50 according to a fifth embodiment. In FIG. 9, the power storage device 50 includes a current collector 51, a positive electrode 52, a solid electrolyte layer 53, a negative electrode 54, and a current collector 55. The current collector 21 described in the second embodiment can be used as the current collectors 51 and 55. The electrode 20 described in the second embodiment can be used as the positive electrode 52 and the negative electrode 54.

The solid electrolyte layer 53 is disposed between the positive electrode 52 and the negative electrode 54. The solid electrolyte 10 described in the first embodiment may be included as the solid electrolyte layer 53. Alternatively, the solid electrolyte layer 53 may be a different solid electrolyte. In the present embodiment, the solid electrolyte-including electrode of the present disclosure is employed as both the positive electrode 52 and the negative electrode 54. The solid electrolyte-including electrode of the present disclosure may be employed only as the negative electrode 54.

According to the fourth and fifth embodiments, the electrode 20 of the present disclosure is used as at least one selected from the positive electrode and the negative electrode. The electrode 20 includes the solid electrolyte 10 of the present disclosure. Since the solid electrolyte 10 has high ionic conductivity, a power storage device having excellent electrical characteristics can be obtained by the use of the solid electrolyte 10.

### EXAMPLES

### (Example 1)

BMP-TFSI, Li-TFSI, a silicon alkoxide, 1.0 ml of 1-methoxy-2-propanol (PGME), and 0.5 ml of water were placed in a glass container and mixed to obtain a liquid mixture. A mixture of TEOS and methoxytriethyleneoxypropyltrimethoxysilane was used as the silicon alkoxide. Methoxytriethyleneoxypropyltrimethoxysilane is a compound represented by the formula (1), where n = 3 is satisfied. Hereinafter, "methoxytriethyleneoxypropyltrimethoxysilane" may also be referred to as "compound 1".

The mixing ratio between BMP-TFSI and water was BMP-TFSI:water = 8:1 on a molar basis. The mixing ratio between the silicon alkoxide and BMP-TFSI was silicon alkoxide:BMP-TFSI = 1:1.5 on a molar basis. The mixing ratio between BMP-TFSI and Li-TFSI was BMP-TFSI:Li-TFSI = 1:0.33 on a molar basis. The mixing ratio between TEOS and the compound 1 was TEOS:compound 1 = 95:5 on a molar basis.

Next, the liquid mixture was stored at 80°C. The liquid mixture solidified and turned into a gel mixture in 1 to 2 days. The gel mixture was dried at 80°C for 3 days. A solid electrolyte of Example 1 was thus obtained.

### (Example 2)

A solid electrolyte of Example 2 was produced in the same manner as in Example 1, except that the mixing ratio between TEOS and the compound 1 was changed to TEOS:compound 1 = 98:2 on a molar basis.

### (Example 3)

A solid electrolyte of Example 3 was produced in the same manner as in Example 1, except that the mixing ratio between TEOS and the compound 1 was changed to TEOS:compound 1 = 90:10 on a molar basis.

### (Example 4)

A solid electrolyte of Example 4 was produced in the same manner as in Example 1, except that a compound 2 was used instead of the compound 1. The compound 2 is a compound represented by the formula (1), where n = 9 to 12 is satisfied.

### (Example 5)

A solid electrolyte of Example 5 was produced in the same manner as in Example 1, except that a compound 3 was used instead of the compound 1. The compound 3 is a compound represented by the formula (2), where n = 25 to 30 is satisfied.

### (Example 6)

A solid electrolyte of Example 6 was produced in the same manner as in Example 1, except that EMI-TFSI was used instead of BMP-TFSI.

### (Example 7)

A solid electrolyte of Example 7 was produced in the same manner as in Example 1, except that the mixing ratio between TEOS and the compound 1 was changed to TEOS:compound 1 = 99.5:0.5 on a molar basis.

### (Comparative Example 1)

A solid electrolyte of Comparative Example 1 was produced in the same manner as in Example 1, except that the mixing ratio between the silicon alkoxide and BMP-TFSI was changed to silicon alkoxide:BMP-TFSI = 1:1 on a molar basis.

### (Comparative Example 2)

A solid electrolyte of Comparative Example 2 was produced in the same manner as in Example 1, except that the compound 1 was not included in the silicon alkoxide.

### (Comparative Example 3)

A solid electrolyte of Comparative Example 3 was produced in the same manner as in Example 1, except that the mixing ratio between TEOS and the compound 1 was changed to TEOS:compound 1 = 80:20 on a molar basis.

### (Comparative Example 4)

A solid electrolyte of Comparative Example 4 was produced in the same manner as in Example 1, except that a compound 4 was used instead of the compound 1. The compound 4 is a compound represented by the formula (1), where n = 38 to 42 is satisfied.

### [Evaluation of ionic conductivity]

Each solid electrolyte was moved into a glove box with an argon atmosphere having a dew point of -60°C or lower, and was measured for an ionic conductivity at room temperature (about 25°C) by an AC impedance method.

### [Evaluation of breaking stress]

Each solid electrolyte was measured for a breaking stress using a viscoelasticity measurement system (HAAKE MARS 40 manufactured by Thermo Fisher Scientific Inc.) in a dry air atmosphere having a dew point of -40°C or lower. Specifically, a stainless steel pin having a diameter of 10 mm was pushed into each solid electrolyte at 1 mm/sec to measure a breaking stress.

### [Evaluation of flexibility]

The flexibility of each solid electrolyte was evaluated by the following method. The solid electrolyte was sandwiched by a pair of stainless steel plates, and a pressure was applied from above. When the thickness of the solid electrolyte became 75% of the original thickness, the application of the pressure was stopped. This process was repeated. When the solid electrolyte returned to its original shape after three or more repetitions of the process, the flexibility thereof was judged as "o". When the solid electrolyte returned to its original shape after two repetitions of the process but did not return to its original shape after three repetitions of the process, the flexibility thereof was judged as "Δ". When the solid electrolyte did not return to its original shape after the process is performed once, the flexibility thereof was judged as "×".

### [Evaluation of porous silica]

Each solid electrolyte was immersed in isopropyl alcohol at room temperature for 8 hours to extract the ionic liquid and the lithium salt. This extraction process was performed three times to remove the ionic liquid and the lithium salt. Porous silica was obtained in this manner.

Next, the porous silica was dried by supercritical drying using CO₂ to remove the isopropyl alcohol. Specifically, the porous silica and the isopropyl alcohol were put in a pressure container made of stainless steel to immerse the porous silica in the isopropyl alcohol. The inside of the pressure container was heated to 50°C. CO₂ was introduced into the pressure container to increase the pressure therein to 5 MPa. The pressure in the pressure container was increased to 12 MPa while CO₂ was being introduced into the pressure container at 30 ml/min. Then, the pressure container was allowed to stand still at 12 MPa and 50°C for 5 hours. Afterwards, CO₂ was supplied into the pressure container at 30 ml/min over 8 hours to discharge the isopropyl alcohol. The pressure was decreased from 12 MPa to the atmospheric pressure over 2 hours while the temperature was maintained at 50°C. The porous silica was then taken out of the pressure container.

A pore diameter distribution of the porous silica was measured by a BJH method (desorption side) using a nitrogen adsorption measurement apparatus (AutoSorb3 manufactured by Quantachrom). A peak value (average pore diameter) of the pore diameters was calculated from the pore diameter distribution, and a specific surface area was calculated by a BET method.

**[Table 1]**

| | Ionic liquid | Silica source including functional group | All silica sources: ionic liquid (molar ratio) | TEOS: silica source including functional group (molar ratio) | Ionic conductivity (mS/cm) | Average pore diameter of silica (nm) | Breaking strength (kPa) | Flexibility |
|---|---|---|---|---|---|---|---|---|
| Example 1 | BMP-TFSI | Compound 1 | 1:1.5 | 95:5 | 1.8 | 53 | 20.5 | ○ |
| Example 2 | BMP-TFSI | Compound 1 | 1:1.5 | 98:2 | 1.7 | 51 | 15.5 | ○ |
| Example 3 | BMP-TFSI | Compound 1 | 1:1.5 | 90:10 | 1.4 | 48 | 27.2 | ○ |
| Example 4 | BMP-TFSI | Compound 2 | 1:1.5 | 95:5 | 1.6 | 52 | 24.0 | ○ |
| Example 5 | BMP-TFSI | Compound 3 | 1:1.5 | 95:5 | 1.8 | 50 | 22.0 | ○ |
| Example 6 | EMI-TFSI | Compound 1 | 1:1.5 | 95:5 | 2.9 | 63 | 18.8 | ○ |
| Example 7 | BMP-TFSI | Compound 1 | 1:1.5 | 99.5:0.5 | 1.7 | 58 | 8.5 | Δ |
| Comparative Example 1 | BMP-TFSI | Compound 1 | 1:1 | 95:5 | 1.0 | 12 | 7.0 | × |
| Comparative Example 2 | BMP-TFSI | None | 1:1.5 | 100:0 | 1.8 | 61 | 8.6 | × |
| Comparative Example 3 | BMP-TFSI | Compound 1 | 1:1.5 | 80:20 | (Not solidified) | | | |
| Comparative Example 4 | BMP-TFSI | Compound 4 | 1:1.5 | 95:5 | (Not solidified) | | | |

### [Evaluation results]

Table 1 shows the evaluation results for Examples and Comparative Examples. In Table 1, the term "silica source including functional group" refers to any of the silicon alkoxides having the polyether structure. The term "all silica sources" refers to the sum of the silicon alkoxide (the compounds 1 to 4) having the polyether structure and the silicon alkoxide (TEOS) including no polyether structure.

As can be understood by comparison between Example 1 and Comparative Example 1, the average pore diameter of the porous silica differs depending on the amount of the ionic liquid supported by a skeleton of the porous silica. The average pore diameters of the porous silicas of Example 1 and Comparative Example 1 were respectively 53 nm and 12 nm. The solid electrolyte of Example 1 had a higher ionic conductivity than the solid electrolyte of Comparative Example 1 and had excellent flexibility.

The solid electrolytes of Examples 1 to 6 had a breaking strength of 10 kPa or more and also had improved flexibility. The flexibility of the solid electrolyte of Example 7 was slightly inferior to those of Examples 1 to 6, but was superior to that of the solid electrolyte of Comparative Example 2 including no polyether structure.

In Comparative Examples 3 and 4, the liquid mixtures were not solidified and no solid electrolytes were obtained. It is thought that no solid was obtained in Comparative Example 3 because the amount of the compound 1 used was too large with respect to the amount of the all silica sources. It is thought that no solid was obtained in Comparative Example 4 because the polyether structure was too long.

Example 5 is a solid electrolyte produced using the compound 3. The compound 3 is a compound represented by the formula (2), where n = 25 to 30 is satisfied. The compound 3 had a large number of ether groups and also had a long polyether structure. In the solid electrolyte of Example 5 produced using the compound 3, one end of the polyether structure is bonded to a silicon atom forming the porous silica, while the other end of the polyether structure was bonded to another silicon atom forming the porous silica. It is thought that consequently, the reaction converting the liquid mixture into the solid electrolyte sufficiently progressed although the number of ether groups was relatively large.

The solid electrolyte of Example 6 included EMI-TFSI as the ionic liquid. The solid electrolyte of Example 6 exhibited the highest ionic conductivity among Examples although having the breaking strength and the flexibility equivalent to those of Example 1 in which the conditions except for the type of the ionic liquid were the same as those for Example 6. Regarding the breaking strength and the flexibility, no significant differences attributable to the difference in ionic liquid were seen.

### INDUSTRIAL APPLICABILITY

The techniques of the present disclosure are useful for power storage devices such as lithium-ion secondary batteries.

## Claims

1. A solid electrolyte, comprising:
a porous dielectric having a plurality of pores interconnected; and
an electrolyte comprising a metal salt and at least one selected from the group consisting of an ionic compound and a bipolar compound and at least partially filling an interior of the plurality of pores, wherein
the porous dielectric comprises a polyether structure, and
the plurality of pores have an average pore diameter of 20 nm or more and 100 nm or less.

2. The solid electrolyte according to claim 1, wherein the polyether structure is bonded to a metal atom forming the porous dielectric.

3. The solid electrolyte according to claim 1 or 2, wherein
one end of the polyether structure is bonded to a metal atom forming the porous dielectric, and
the other end of the polyether structure is bonded to another metal atom forming the porous dielectric.

4. The solid electrolyte according to claim 2 or 3, wherein a bond between the polyether structure and the metal atom is a covalent bond.

5. The solid electrolyte according to any one of claims 1 to 4, wherein the polyether structure comprises 3 or more ether groups.

6. The solid electrolyte according to any one of claims 1 to 5, wherein the polyether structure comprises 35 or less ether groups.

7. The solid electrolyte according to any one of claims 1 to 6, wherein the polyether structure comprises a polyethylene oxide structure.

8. The solid electrolyte according to any one of claims 1 to 7, wherein a molar ratio of the polyether structure to a metal atom forming the porous dielectric is 1% or more and 15% or less.

9. The solid electrolyte according to any one of claims 1 to 8, wherein the porous dielectric comprises porous silica having the polyether structure.

10. The solid electrolyte according to any one of claims 1 to 9, wherein an amount of the ionic compound and the bipolar compound in the solid electrolyte is 70 volume% or more and 95 volume% or less.

11. The solid electrolyte according to any one of claims 1 to 10, wherein the porous dielectric has a specific surface area of 300 m²/g or more and 1000 m²/g or less.

12. An electrode, comprising:
the solid electrolyte according to any one of claims 1 to 11; and
an electrode active material.

13. A power storage device, comprising:
a positive electrode;
a negative electrode; and
a solid electrolyte layer disposed between the positive electrode and the negative electrode, wherein
the solid electrolyte layer comprises the solid electrolyte according to any one of claims 1 to 11.

14. A power storage device, comprising:
a positive electrode;
a negative electrode; and
a solid electrolyte layer disposed between the positive electrode and the negative electrode, wherein
at least one selected from the positive electrode and the negative electrode is the electrode according to claim 12.

15. A method for producing a solid electrolyte, comprising:
preparing a liquid mixture by mixing a precursor of a porous dielectric, at least one selected from the group consisting of an ionic compound and a bipolar compound, a metal salt, water, and an organic solvent; and
forming a solid electrolyte by causing gelation of the liquid mixture to form a gel mixture and drying the gel mixture, wherein
the precursor has a polyether structure.

16. The production method according to claim 15, wherein the precursor comprises a metal alkoxide having the polyether structure.

17. The production method according to claim 16, wherein the metal alkoxide is a silicon alkoxide.
